# EUROPÄISCHE PATENTSCHRIFT

(11) **EP 0 508 037 B1**
(45) Veröffentlichungstag und Bekanntmachung des Hinweises auf die Patenterteilung: **06.12.1995**
(21) Anmeldenummer: 91890077.0
(22) Anmeldetag: 12.04.1991
(51) Int. Cl.: F03B 15/16

(54) **Verfahren zur Regelung eines Kleinwasserkraftwerkes**
Procedure for controlling small hydro-electric plants
Procédé de réglage de petites centrales hydro-électriques

(43) Veröffentlichungstag der Anmeldung: 14.10.1992
(73) Patentinhaber: Stenzel, Heinz, Ing., A-1090 Wien (AT)
(72) Erfinder: Stenzel, Heinz, Ing., A-1090 Wien (AT)

(56) Entgegenhaltungen:
- CH-A- 157 750
- DE-A- 3 218 296
- DE-C- 233 063

## Beschreibung

Die Erfindung betrifft ein Verfahren zur Regelung eines Kleinwasserkraftwerkes, das eine Turbine, einen Generator, einen Widerstand und eine Regelung zur Aufteilung des von der Turbine erzeugten Stromes auf einen Benutzer und den Widerstand zur Konstanthaltung des insgesamt abgenommenen Stromes aufweist, wobei bei einer Änderung der vom Benutzer abgenommenen Leistung die Regelung eine entsprechende Änderung der im Widerstand in Wärme umgewandelten Leistung vornimmt, gleichzeitig oder daran anschließend, jedoch die Leistung der Turbine, beispielsweise durch Änderung der Beaufschlagung, so ändert, daß die im Widerstand in Wärme umgewandelte Leistung wieder den ursprünglichen Wert annimmt.

Eine solche Regelung ist aus der DE-PS 233 063 bekannt. Sie wurde verwendet, um beim Absinken der vom Verbraucher abgenommenen Leistung die Beaufschlagung so langsam drosseln zu können, daß kein Wasserschlag auftritt. Die Änderung der im Widerstand in Wärme umgewandelten Leistung erfolgt dabei in Abhängigkeit der steigenden Turbinendrehzahl.

Diese Regelung hat den Nachteil, auf die Störung erst zu reagieren, wenn die mechanische Trägheit überwunden ist, was zu Spannungsanstiegen im Netz und unter Umständen zu instabilen Betriebsverhältnissen führt. Dazu kommt noch, daß die heutigen Verbraucher im Gegensatz zu denen der DE-PS, die 1909 erschienen ist, bei einer solchen Regelung beschädigt werden bzw. nicht ordnungsgemäß arbeiten könnten.

Es sind auch eine Reihe anderer Regelungen bekannt:
Die AT-PS 369 592 sieht eine Regelschaltungsanordnung für eine hydroelektrische Kraftwerksanlage vor, bei der zur konstanthaltung der abgegebenen Leistung eine mit der Turbine gekoppelte Hydraulikpumpe gegen einen veränderlichen Widerstand arbeitet. Diese Maßnahme ist konstruktiv extrem aufwendig und für die Bedürfnisse eines Kleinkraftwerkes noch immer zu langsam.

Die DE-OSen 28 55 404 und 29 03 039 sehen Leistungsregelungen für Großkraftwerke bei Netzstörungen, bei einem Netzabfall bzw. einer Netzzuschaltung mit dem Problem des Umschaltens von der Drehzahlregelung zur Leistungsregelung und zur Überwindung von Netzpendelungen vor.

All diese Probleme treten bei Kleinkraftwerken nicht oder in einer Form auf, die mit den Maßnahmen der zitierten Druckschriften nicht behoben werden könnten.

Zur Regelung von Kleinkraftwerken war es bisher aus der DE-OS 32 18 296 bekannt, die Leistung des Generators zwischen dem Verbraucher und einem Widerstand geregelt zu teilen. Änderungen im Netz wurden elektronisch erfaßt und die dem Widerstand zugeführte Leistung wurde, ebenfalls elektronisch, entsprechend geändert. Dies bedeutete, daß der Widerstand eine Aufnahmefähigkeit entsprechend der Generatorleistung haben mußte, und daß die Turbine immer im Nennleistungsbereich arbeitete, wodurch sie maximal belastet und beansprucht war und wodurch permanent der maximale Wasserverbrauch auftrat.

Derartige Kleinkraftwerke werden in entlegenen Gebieten, die über ein passendes Wasseraufkommen verfügen, eingesetzt. Spezielle Anwendungsgebiete sind Schutzhütten, Bergbauernhöfe u.ähnl.

Da bei derartigen Kleinkraftwerken die Schwankungen des Stromverbrauches, gemessen am maximal möglichen Verbrauch, groß sind und da die Regelgeschwindigkeit der Turbine, gemessen an der Geschwindigkeit der Verbrauchsänderung klein ist, ist es notwendig, einen Lastausgleich vorzusehen, wie ihn die DE-OS 32 18 296 beschreibt. So ist es möglich, die Turbine selbst ohne weitere Steuerung oder Regelung zu betreiben und Schwankungen des tatsächlichen Verbrauches von ihr fernzuhalten.

Eine Regelung der abgegebenen Strommenge durch eine Regelung der Tubinenleistung wäre, wie eingangs erwähnt, um Größenordnungen zu langsam. Selbst bei den üblicherweise verwendeten Pelton-Turbinen wäre eine Regelung mit Strahlabweisern nicht rasch genug, um das elektrische Netz stabil zu halten.

Solche Kleinkraftwerke sind ohne Probleme in Gebieten zu gebrauchen, bei denen, gemessen am tatsächlichen Leistungsbedarf, genügend Wasser zur Verfügung steht. Wenn das Wasser für die Zeiten des Verbrauches in den Zeiten, in denen kein Verbrauch stattfindet, gesammelt wird, ist der Betrieb eines solchen Kraftwerkes umständlich und aufwendig, da die Turbine entsprechend den tatsächlichen Gegebenheiten eingeschaltet und gegebenenfalls auf vorbestimmte Nennleistungswerte eingestellt werden muß.

Es ist auch Ziel der Erfindung, diese Unzulänglichkeiten zu vermeiden und ein Kleinkraftwerk der eingangs genannten Art so zu steuern, daß der tatsächliche Wasserbedarf so gering wie möglich gehalten wird.

Die Erfindung sieht zur Vermeidung dieser Nachteile vor, daß die Änderung der Turbinenleistung in Abhängigkeit von der Größe der im Widerstand in Wärme umgewandelten elektrischen Leistung erfolgt, und daß eine Vergleichsschaltung feststellt, ob die Größe dieser Leistung
über einem vorbestimmten oberen Wert (oberer Schaltpunkt) liegt,
zwischen diesem oberen und einem vorbestimmten unteren Wert (unterer Schaltpunkt) liegt oder
unter diesem unteren Wert liegt; wobei in Abhängigkeit von diesem Vergleich im
ersten Fall die Leistung der Turbine gedrosselt, im
zweiten Fall die Leistung der Turbine nicht geändert und im
dritten Fall die Leistung der Turbine erhöht wird, wobei bevorzugt der untere Schaltpunkt knapp über der Leistungsaufnahme des größten Einzelverbrauchers des Netzes des Kleinkraftwerkes liegt.

Durch diese Maßnahme ist es möglich, nur soviel Leistung im Widerstand in Wärme zu verwandeln, die der des größten zuschaltbaren Einzelverbrauchers (meist etwa 2 kW) entspricht. Die elektronische Verteilerregelung zieht mit hoher Geschwindigkeit die Zuschaltleistung von der Widerstandsleistung ab.

Die erfindungsgemäße Nachführregelung stellt danach die vorgesehene Reseve im Restenergiewiderstand durch hydraulische Leistungskorrektur wieder her.

Da die Leistungsänderung der Turbine üblicherweise durch eine Mengenänderung des abgearbeiteten Wassers erfolgt, im Falle einer Pelton-Turbine durch eine Verschiebung der Düsennadel(n), bewirkt eine solche Leistungssteuerung eine Optimierung des Wasserverbrauches. Damit ist es möglich, vorhandene Wassermengen bestmöglich zu nutzen und insbesondere die Speicherhaltung zu optimieren.

Darüberhinaus wird auch die Standzeit der Lager, des Generators und der Turbine wesentlich verlängert und der Betrieb des Kraftwerkes wird insgesamt wirtschaftlicher.

In einer vorteilhaften Ausgestaltung liegt der untere Schaltpunkt knapp über der Leistungsaufnahme des größten Einzelverbrauchers des Netzes des Kleinkraftwerkes. Damit ist es möglich, daß auch beim Zuschalten dieses größten Verbrauchers im elektrischen Netz keine Komplikationen auftreten. Der obere Schaltpunkt liegt vorteilhafterweise in solchem Abstand vom unteren Wert, daß die Häufigkeit der Regelvorgänge in einer angemessenen Frequenz erfolgt. Dieser Wert kann in Kenntnis der Erfindung, der verwendeten Turbine und deren Charakteristika vom Fachmann leicht bestimmt werden.

Die Schaltungsanordnungen und Vorrichtungen, die notwendig sind, um vom Sensor und der Vergleichsschaltung die Steuerung der Turbine zu bewirken, können dem Stand der Technik entsprechen und brauchen daher im Rahmen der Beschreibung nicht näher erläutert werden. Eine erfindungsgemäß bevorzugte Anordnung wird weiter unten eingehend besprochen.

Das Meßgerät zur Leistungsmessung ist ebenso wie die Vergleichsschaltung in der Elektrotechnik wohlbekannt und kann vom Fachmann in Kenntnis der Erfindung in Abhängigkeit vom verwendeten Genereator und der verwendeten Art der Turbinenregelung ausgewählt werden.

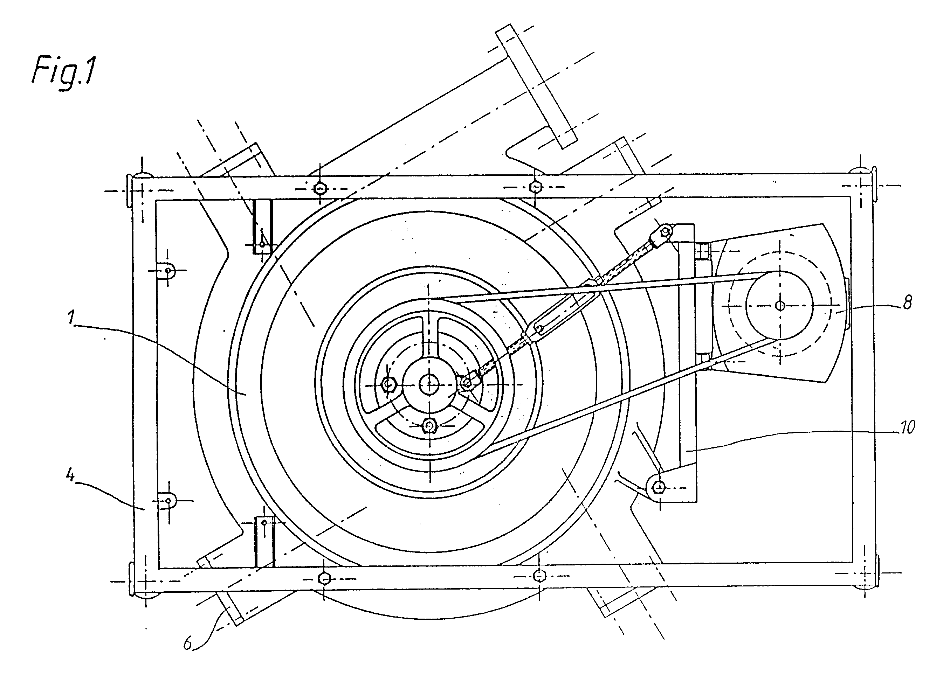

Die Erfindung wird anhand eines Ausführungsbeispieles näher erläutert. Dabei zeigt die
Fig. 1 ein erfindungsgemäß ausgestaltetes Kleinkraftwerk in Draufsicht,
Fig. 2 in Unteransicht,
Fig. 3 im Schnitt,
Fig. 4 zeigt eine erfindungsgemäße Ausgestaltung des Regelventils und
Fig. 5 eine Schaltungsanordnung zum Betrieb des Regelventils.

Eine Pelton-Turbine 1 ist in einem Rahmen 4 gelagert. Die Turbine verfügt über beispielsweise vier Düseneinsätze 6, wobei in Abhängigkeit von der zur Verfügung stehenden Wassermenge und Fallhöhe nur ein Teil der Einsätze tatsächlich mit Düsen versehen sein kann.

Mittels eines Keilriemens wird ein Generator 8 angetrieben, der auf einem Kipptisch 10 montiert ist. Der Keilriemenantrieb erlaubt es, die Übersetzung zwischen Turbine und Generator billig und leicht zu ändern.

An der Unterseite der Turbine ist ein Stellrad 11 vorgesehen, welches Strahlabweiser beim Durchgehen der Turbine in die Strahlen schiebt.

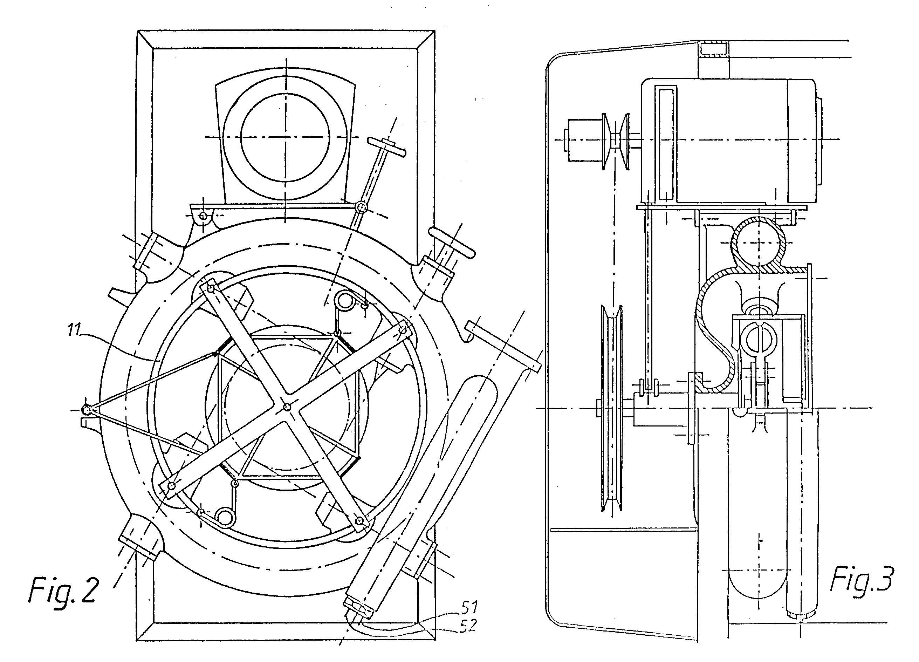

Ein Widerstand ist vorteilhafterweise im Ober- oder Unterwasser angeordnet, um die entstehende Wärme günstig abführen zu können. Seine Anschlußkontakte 51, 52 sind in Fig. 2 dargestellt. Die maximal vom Widerstand aufnehmbare Leistung entspricht vorzugsweise der Maximalleistung des Generators. Eine bekannte Regelschaltung verteilt die vom Generator kommende Leistung in Abhängigkeit vom momentanen Verbrauch auf den Verbraucher und den Widerstand. Diese Schaltung ist bei Kleinkraftwerken zur Aufrechterhaltung eines geordneten Betriebes unabdingbar. Die Nennleistung der Turbine wird zu Betriebsbeginn oder bei vorhersehbaren längerfristigen Änderungen des Bedarfes von Hand eingestellt. Die damit verbundenen Nachteile wurden weiter oben geschildert und die Erfindung setzt an diesem Punkt an.

Ein Leistungssensor bekannter Art mißt die Größe der im Widerstand in Wärme umgewandelten Energie. Diese Meßgröße wird mit zwei vorgegebenen Größen verglichen und in Abhängigkeit vom Ergebnis des Vergleiches werden die Düsennadeln bewegt oder unverändert gelassen. Je nach Richtung der Bewegung der Düsennadeln steigt oder sinkt die von der Turbine mittels des Generators gelieferte elektrische Leistung und simultan dazu die pro Zeiteinheit abgearbeitete Wassermenge.

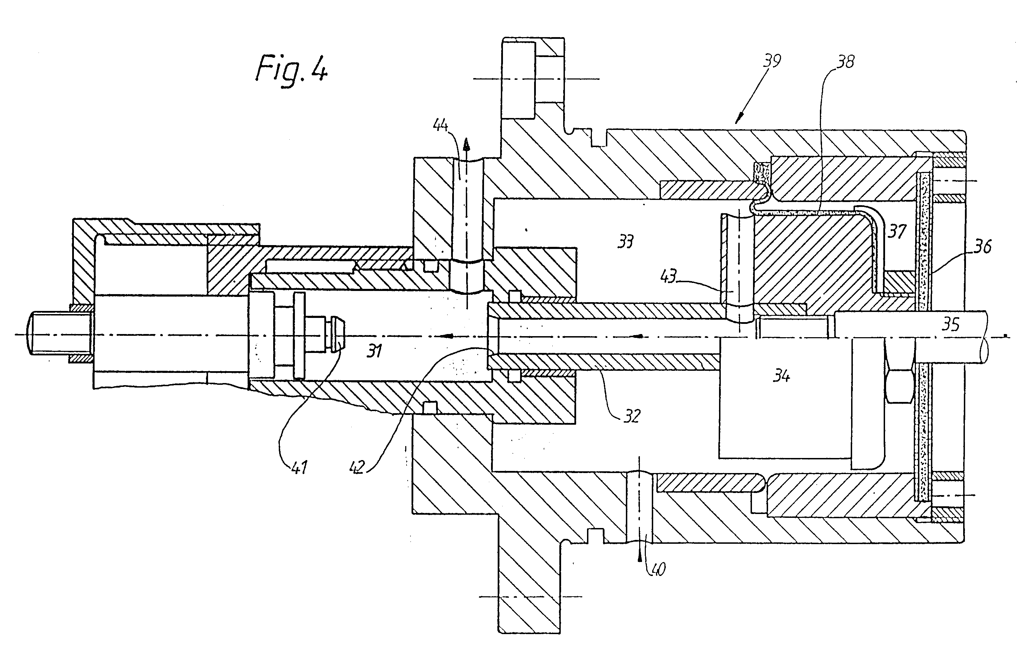

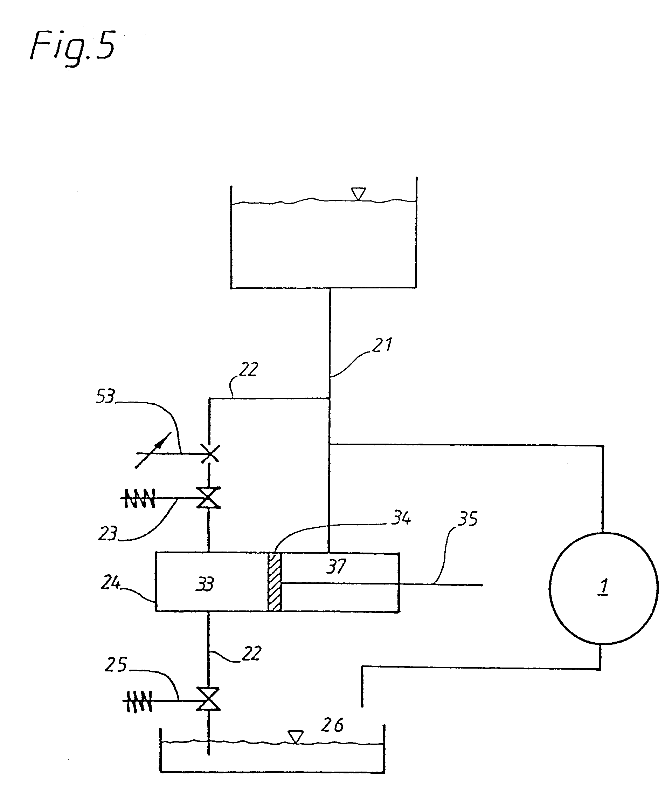

Die Verstellung der Düsennadeln erfolgt vorzugsweise mittels einer erfindungsgemäßen Regelventilanordnung. Diese Regelventilanordnung, die anhand einer Pelton-Turbine beschrieben wird, ist nicht auf die Verwendung bei einer solchen Turbine beschränkt und kann auch vorteilhaft verwendet werden, ohne daß eine erfindungsgemäße Regelung der Turbinenleistung vorhanden ist. Sie wird durch zwei Magnetventile angesteuert und arbeitet folgendermaßen (Fig. 4 und 5).

Von einer Druckleitung 21 führt eine Leitung 22 zu einer regelbaren Drossel 53 und einem ersten Magnetventil 23. Von diesem Magnetventil führt die Leitung 22 weiter zu einem Stellglied 24 und von diesem über ein zweites Magnetventil 25 zum Unterwasser 26. Sind beide Magnetventile 23, 25 geschlossen, bewirkt das zwischen ihnen eingeschlossene Wasser eine Fixierung des Stellgliedes 24 und somit eine konstantbleibende Einstellung der Düsennadel(n). Soll die Düsennadel verstellt werden, genügt es, eines der beiden Magnetventile zu öffnen, wodurch in Abhängigkeit von der Bauart des Stellgliedes eine Verschiebung desselben in die eine oder andere Richtung erfolgt. Stellt die Vergleichsschaltung das Erreichen des gewünschten Zustandes fest, wird das bisdahin offengehaltene Ventil wieder geschlossen. Bei einer Änderung des Stromverbrauches, die zum Verlassen des gewünschten Bereiches führt, beginnt das Spiel von Neuem.

Als Stellglied 24 wird bevorzugt das in Fig. 4 dargestellte Element verwendet. Dieses Element arbeitet nach dem Prinzip eines beidseitig beaufschlagten Kolben, dessen Kolbenstange die entsprechenden Stellbewegungen vornimmt.

Von dem in Fig. 4 nicht dargestellten Magnetventil 23 gelangt Wasser aus dem Bereich und mit dem Druck der Turbinenzuleitung durch eine Einlaßöffnung 40 in einen ersten Zylinderraum 33. Dieses Wasser wirkt auf die diesem Zylinderraum zugewandte Seite eines Kolbens 34. Vom Raum 33 gelangt das Wasser durch eine radiale Bohrung 43 im Kolben 34 und durch die hohle Kolbenstange 32 in einen Verteilerraum 31. Im Verteilerraum ist ein von Hand in axialer Richtung verstellbarer, die maximale Öffnung bestimmender Verschluß 41 vorgesehen, der mit dem ihm zugewandten Ende der Kolbenstange 32 nach Art eines Ventiles zusammenarbeitet und die Leitung 40 dicht verschließt, wenn die Kolbenstange 32 sich bis zum Anschlag nach links in der Zeichnung bewegt.

Auf der Kolbenstange 32 ist ein Kolben 34 befestigt, der koaxial zur Kolbenstange 32 eine Regelstange 35 aufweist. Diese Regelstange 35 wird in einer porösen Wand 36 geführt. Durch diese Wand kann Wasser, welches sich auf der Seite der Regelstange 35 befindet, in einen Zylinderraum 37 durchtreten, wobei es gereinigt wird. Dieses gereinigte Wasser wirkt auf die Seite des Kolbens 34, die dem Zylinderraum 37 zugekehrt ist. Dieses Wasser stammt aus dem Bereich des Nadelventils, dessen Ventilstange mit der Regelstange verbunden ist und weist den im Turbinenzulauf herrschenden Druck auf.

Als Dichtung zwischen den beiden Räumen 33 und 37 ist eine flexible Membran 38 (Topfmanschette, Stulpendichtung) vorgesehen, die einerseits dicht mit dem Kolben 34 und andererseits dicht mit dem Zylindermantel 39 verbunden ist. Dadurch ist eine zuverläßige Dichtung und eine vernachläßigbare Korrosion des Kolbens, auch bei verschmutztem und sandhältigem Wasser, gesichert.

Durch das Ventil 41, 42 ist sichergestellt, daß im ersten Zylinderraum 33 auch bei offenem Ventil 25 ein Druck herrscht, der vom Druck im zweiten Zylinderraum 37 nur um einen Betrag verschieden ist, den die Topfmanschette 38 sicher über einen langen Zeitraum erträgt.

Der Wassereinlaß vom Zylinderraum 33 in den Koben 34 ist so angeordnet, daß er im Betrieb nach oben zeigt, wodurch eine selbsttätige Entlüftung des Zylinderraumes 33 bewirkt wird.

Die Wirkungsweise der Stellvorrichtung ist folgende: Wenn beide Ventile 23, 25 geschlossen sind, ist das Volumen der zwischen ihnen eingeschlossenen Wassermenge, abgesehen von unbeachtlichen Kompressionseffekten, konstant und der Kolben 34 wird an der Stelle festgehalten, an der er sich gerade befindet. Dabei stellt sich im ersten Zylinderraum 33 der im Turbinenzulauf herrschende Druck, verändert um den der Haltekraft entsprechenden Druck, ein.

Beim Zuschalten einer elektrischen Last verkleinert die bekannte Regeleinrichtung die am Widerstand in Wärme umgewandelte Leistung um das Ausmaß des Lastzuwachses. Wenn dadurch die Leistung am Widerstand unter den unteren Schaltpunkt fällt, erkennt dies die erfindungsgemäße Schaltung und öffnet das Ventil 25.

Dadurch fließt Wasser vom ersten Zylinderraum 33 durch die Bohrung 43 und die hohle Kolbenstange 32, den Verteilerraum 31 und die Leitung 44, und der Kolben 34 verschiebt sich nach links, wodurch das Nadelventil der Pelton-Turbine weiter geöffnet wird und die Leistungsabgabe des Generators 8 steigt. Dadurch wird nach einiger Zeit der untere Regelpunkt wieder erreicht und überschritten, was die erfindungsgemäße Schaltung wahrnimmt und was zum Schließen des Ventiles 25 führt. Ab diesem Zeitpunkt bleibt der Kolben 34 und somit das Nadelventil in der nunmehr erreichten Stellung.

Beim Abschalten eines elektrischen Verbrauchers geschieht der gleiche Vorgang mit dem einzigen Unterschied, daß das Magnetventil 23 geöffnet wird und der Kolben 34 sich unter der Wirkung einer nicht dargestellten Feder oder auch nur des am Nadelventil vorbeistreichenden Wassers (hydrodynamisches Paradoxon) nach rechts bewegt und das Nadelventil mehr und mehr schließt.

Die Durchmesser der Leitung 22 und die Volumina der Zylinderräume 33, 37 können vom Fachmann in Kenntnis der Erfindung und der verwendeten Turbine leicht so dimensioniert werden, daß die Geschwindigkeit des Öffnens und Schließens des Nadelventils der Turbine den Spezifikationen des Turbinenherstellers, den Erfordernissen der Druckleitung zur Vermeidung eines Wasserschlages und den Erfordernissen des Druckabfalles der Stulpendichtung 38 genügt.

Es ist von Fall zu Fall zu entscheiden, ob die Magnetventile im stromlosen Zustand geöffnet oder geschlossen sein sollen. Es kann zur Unterstützung der Bewegung des Kolbens 34 im ersten Zylinderraum 33 eine Feder vorgesehen sein, die sicherstellt, daß eine Schließbewegung des Kolbens 34 erfolgt, wenn das Magnetventil 23 geöffnet wird.

Wirkt die Einrichtung auf einen Stellring, der das Leitwerk der Turbine verstellt, so ist der zweite Zylinderraum 37 mit Wasser aus dem Bereich des Turbineneinlaufes zu versorgen, oder es ist im Bereich des zweiten Zylinderraumes 37 eine Druckfeder vorzusehen, die statt des Wassers eine Kraft ausübt, die bei allen Stellungen des Kolbens 34 zwischen der Kraft entsprechend dem Druck des Oberwassers und dem Druck des Unterwassers liegt. Dadurch kann eine Bewegung des Kolbens durch das Öffnen und Schließen der beiden Ventile 23, 25 sichergestellt werden. In diesem Fall kann auf die Topfmanschette 38 verzichtet werde, doch muß die vorhandene Dichtung in der Lage sein, den vollen Druckunterschied aufzunehmen.

Die erfindungsgemäße Stellvorichtung kann bei einem oder bei mehreren der vorhandenen Nadelventile vorgesehen sein. Ist sie bei mehreren Ventilen vorgesehen, kommt es dazu, daß beim Betrieb mit etwa mittlerer Leistung (gemessen an der maximal möglichen Gesamtleistung) nicht alle Ventile teilweise geöffnet sind, was für den Wirkungsgrad nachteilig wäre, einige Ventile geshlossen sind, einige offen, und daß nur eines tatsächlich geregelt wird. Erst wenn auch dieses Ventil zufolge der Steuerung völlig geöffnet oder geschlossen ist, verläßt eines der bis dahin ständig geschlossenen oder geöffneten Ventile diese Zustand und wird geregelt.

Diese Selbststabilisierung ist auf das hydrodynamische Paradoxon und auf die immer vorhandenen Unterschiede der Ventile zurückzuführen.

## Patentansprüche

1. Verfahren zur Regelung eines Kleinwasserkraftwerkes, das eine Turbine, einen Generator, einen Widerstand und eine Regelung zur Aufteilung des von der Turbine erzeugten Stromes auf einen Benutzer und den Widerstand zur Konstanthaltung des insgesamt abgenommenen Stromes aufweist, wobei bei einer Änderung der vom Benutzer abgenommenen Leistung die Regelung eine entsprechende Änderung der im Widerstand in Wärme umgewandelten Leistung vornimmt, gleichzeitig oder daran anschließend, jedoch die Leistung der Turbine, beispielsweise durch Änderung der Beaufschlagung, so ändert, daß die im Widerstand in Wärme umgewandelte Leistung wieder den ursprünglichen Wert annimmt,
dadurch gekennzeichnet, daß
die Änderung der Turbinenleistung in Abhängigkeit von der Größe der im Widerstand in Wärme umgewandelten elektrischen Leistung erfolgt, und daß eine Vergleichsschaltung feststellt, ob die Größe dieser Leistung
über einem vorbestimmten oberen Wert, oberer Schaltpunkt, liegt,
zwischen diesem oberen und einem vorbestimmten unteren Wert, unterer Schaltpunkt, liegt oder
unter diesem unteren Wert liegt; wobei in Abhängigkeit von diesem Vergleich im
ersten Fall die Leistung der Turbine gedrosselt, im
zweiten Fall die Leistung der Turbine nicht geändert und im
dritten Fall die Leistung der Turbine erhöht wird, wobei bevorzugt der untere Schaltpunkt knapp über der Leistungsaufnahme des größten Einzelverbrauchers des Netzes des Kleinkraftwerkes liegt.

2. Stellglied zur Durchführung des Verfahrens nach Anspruch 1, dadurch gekennzeichnet, daß es eine einerseits (33) mit Wasser beaufschlagte andererseits (37) entweder mit Wasser direkt aus dem Bereich des Turbineneinlaufes oder durch eine Feder beaufschlagte Zylinder-Kolbeneinheit umfaßt, wobei die eine Seite (33) das Wasser vom Turbineneinlauf über eine Leitung (22), ein Magnetventil (23) und eine Einlaßöffnung (40) erhält und durch einen Auslaß 44, eine Leitung und ein Magnetventil (25) ins Freie abgibt, wobei weiters der Kolben (34) mittels einer Betätigungsstange (35) eine Leitvorrichtung der Turbine verstellt.

3. Stellglied nach Anspruch 2, dadurch gekennzeichnet, daß die Dichtung zwischen den Beiden Seiten des Kolbens (34) eine Topfmanschette (38) ist, daß das Wasser aus dem ersten Zylinderraum (33) durch eine radiale Bohrung (43) des Zylinders (34), deren mantelseitige Austrittsöffnung im eingebauten Zustand bevorzugt an der Oberseite des Zylinderraumes (33) liegt, und durch die hohl ausgebildete Kolbenstange (32) austritt, wobei die Austrittsöffnung (44) mit einem Verteilerraum (31) in Verbindung steht, in dem, fluchtend mit der Kolbenstange (32), deren Ende einen Ventilsitz (42) aufweist, einen mit dem Ventilsitz korrespondierenden Stopfen (41) angeordnet ist, der einen Anschlag für den Kolbenstange darstellt und ein weiteres Abfließen von Wasser und somit ein weiteres Absenken des Druckes im ersten Zylinderraum (33) verhindert.

## Claims

1. Procedure for regulation of a mini-hydroelectric power plant comprising a water turbine, a generator, a resistor and a regulator for distribution of the current produced by the generator to the user on the one hand, and to the resistor on the other,whereby the regulator compensates an alteration in the user's consumption by a corresponding change in the current passage to the resistor in order to keep the sum of the two constant, subsequently the water flow to the turbine is either increased or decreased to such an extent as to ensure that the transformation of current into heat in the resistor returns to the original amount, **characterised in that :**
the change in turbine-output is dependent on the amount of energy-turnover in the resistor,and that a comparison device shows whether this turnover is
- above a predetermined value (upper switchpoint),or
- between this upper point and a predetermined lower value (lower switchpoint),or
- below this lower switchpoint,
whereby,depending on this reading, in the first case the turbine-output will be throttled,in the second case the output will be maintained at the same level,and in the third case the power-output will be increased,the lower switchpoint preferably being determined so as to be marginally above the power requirement of the biggest single consumer supplied by the network of the powerplant.

2. Adjusting device to implement the procedure according to Claim 1, **characterised in that :**
it comprises a cylinder-piston unit which is water-admitted on the one side(33),and on the other side(37) admitted either by water fed directly from the turbine inlet or by spring load,whereby the one side (33) is fed from the turbine inlet via a conduit (22),a magnetic valve (23) and an inlet orifice (4o), and is drained via an outlet (44),a conduit and a magnetic valve (25), whereby furthermore the piston(34)adjusts the distributor via a rod(35).

3. Adjusting device according to Claim 2,**characterised in that :**
the sealing between the two sides of the piston(34)is a long-stroke roller(38),that the water leaves the first cylinderside (33) via a radial hole (43) in the piston (34),the centrifugal orifice of which is preferably situated on the upper side of the piston(34)and via the channelled piston rod (32),whereby the exit orifice(44)leads to a distribution chamber(31)in which, coaxial with the piston rod(32),the end of which consists of a valve seat(42),a plug(41)corresponding to the said valve seat is situated,which constitutes a buffer for the piston rod and avoids a further drop in pressure in the first cylinder side (33).

## Revendications

1. Procédé de régulation de petite centrale hydro-électrique comportant une turbine, un générateur, une résistance et un réglage pour la répartition de l'électricité produite par la turbine sur un usager ainsi qu'une résistance assurant la continuité de l'alimentation électrique totale, toute modification de la consommation de l'utilisateur de l'utilisateur déchlenchant simultanément ou ultérieurement le réglage d'une adaptation, par injection par exemple, de la puissance de la turbine correspondant à la production de chaleur au niveau de la résistance, de sorte à ramener à la valeur initiale l'energie thermique fournie au niveau de la résistance, **caractérisé** par modification de la puissance de la turbine en fonction de l'energie thermique produite au niveau de la résistance, un couplage différentiel relevant toute énergie électrique supérieure à une valeur maximale préétablie (point de contact d'interrupteur supérieur), équivalent à une plage située entre cette dernière et une valeur minimale préétablie (pont de contact d'interrupteur inférieur), ou inférieure à cette dernière; selon les relevés ainsi obtenus, la puissance de la turbine est réduite dans le premier cas, maintenue dans le deuxième et augmentée dans le troisième, le point de contact d'interrupteur inférieur étant de préférence fixé un tout juste au-dessus de la consommation du plus gros consommateur individuel du réseau de la petite centrale hydro-électrique.

2. Vérin assurant la procédure selon renvendication 1, **caractériseé** d'une part par un système cylindre-piston (**33**) alimenté en eau, d'autre part (**37**) alimentée en eau au niveau de l'arrivée à la turbine ou par ressort, l'eau amenée d'un côté (**33**) par conduit (**22**), soupage magnétique (**23**) et orifice d'admission (**40**) étant rejetée par orifice (**44**), conduit et soupage magnétique (**25**), le piston (**34**) permettant en outre de modifier un dispositif de guidage de la turbine moyennant levier de manoeuvre (**35**).

3. Vérin conforme à la revendication 2, **caractérisé** par la garniture entre les deux côtés du piston (**34**) se présentant sous forme de manchette coupelle (**38**), l'eau étant rejetée de la première partie du cylindre (**33**) par un canal radial (**43**) percé dans le cylindre (**34**), dont l'ouverture d'évacuation côté case se situe de préférence, une fois incorporée au système, dans la partie supérieure du cylindre (**33**) et passe par la tige de piston à noyau creux (**32**), l'orifice de sortie (**44**) étant relié à un espace distributeur (**31**) où se trouve un bouchon (**41**) correspondant au siège de la soupape (**42**) et aligné sur la tige de piston (**32**), formant butoir pour la tige de piston et empêchant ainsi une évacuation de l'eau risquant de réduire davantage la pression dans le premier cylindre (**33**).
